Europäisches Patentamt

European Patent Office

Office européen des brevets

(19)

(11) Numéro de publication : **0 516 514 A1**

## (12) DEMANDE DE BREVET EUROPEEN

(21) Numéro de dépôt : **92401393.1**

(22) Date de dépôt : **21.05.92**

(51) Int. Cl.⁵ : **G09F 13/18**

(30) Priorité : **29.05.91 FR 9106459**

(43) Date de publication de la demande :
**02.12.92 Bulletin 92/49**

(84) Etats contractants désignés :
**AT BE CH DE DK ES GB GR IT LI LU NL PT SE**

(71) Demandeur : **SORELEC**
**La Motte Saint Euverte**
**F-45500 Saint Jean de Braye (Loiret) (FR)**

(72) Inventeur : **Djelouah, Salah**
**La Ferme Saint Nicolas**
**F-45800 Saint Denis de l'Hotel (Loiret) (FR)**
Inventeur : **Fernet,Jean Louis**
**La Cour Marigny**
**F-45260 Lorris (Loiret) (FR)**

(74) Mandataire : **Cabinet Pierre HERRBURGER**
**115, Boulevard Haussmann**
**F-75008 Paris (FR)**

(54) **Panneau d'affichage, notamment publicitaire ou indicateur, éclairé.**

(57) a) Panneau d'affichage, notamment publicitaire ou indicateur, éclairé.
b) Panneau caractérisé en ce que :
— la source d'éclairage est une source lumineuse répartie (7) constituée par un ensemble
de composants électroniques photo-émetteurs
(8),
— la source lumineuse (7) est reliée à une
alimentation électrique indépendante composée d'une batterie (10) et d'un circuit de régulation (9) reliant la batterie (10) à la source
lumineuse (7).

EP 0 516 514 A1

Jouve, 18, rue Saint-Denis, 75001 PARIS

La présente invention concerne un panneau d'affichage et de signalisation, notamment panneau d'affichage publicitaire ou panneau routier, formé d'une plaque transparente éclairée par la tranche.

Actuellement, les panneaux d'affichage publicitaire éclairés par la tranche sont équipés de sources lumineuses. Cet affichage est clair et lisible mais la consommation électrique est importante et ne permet pas d'envisager une alimentation par batterie.

En d'autres termes, ces panneaux d'affichage sont nécessairement reliés aux réseaux électriques, ce qui constitue une contrainte importante dans le choix des emplacements. En outre, lorsque les panneaux éclairants sont utilisés en poste semi mobile, par exemple à l'occasion de foires itinérantes ou autres, il est nécessaire de prévoir des câbles de liaison entre le réseau et l'emplacement du panneau. Cela complique l'installation et la rend encombrante car la multiplicité des panneaux se traduit par un nombre important de connexions électriques.

La présente invention a pour but de créer un panneau d'affichage ou panneau indicateur, éclairé par la tranche, qui soit indépendant et ne demande pratiquement pas d'entretien.

A cet effet, l'invention concerne un panneau d'affichage caractérisé en ce que :
- la source d'éclairage est une source lumineuse répartie constituée par un ensemble de composants électroniques photo-émetteurs,
- la source lumineuse est reliée à une alimentation électrique indépendante composée d'une batterie et d'un circuit de régulation reliant la batterie à la source lumineuse.

Ce panneau d'affichage présente, pour un même éclairement, une consommation électrique qui ne représente plus de 20 % de la consommation d'un panneau éclairé de face selon les moyens traditionnels. Ce panneau peut être à une face ou à double face et est totalement indépendant de toute source électrique extérieure puisqu'il est alimenté par sa batterie ; celle-ci est soit rechargée par une cellule photovoltaïque, soit par une alimentation (transformateur et redresseur) pendant les périodes de non utilisation du panneau. Cette solution est possible du fait de la très faible consommation électrique des photo-diodes ou phototransistors, consommation qui, pour un même éclairement ne correspond qu'à 20 - 30 % de la consommation électrique assurée par un éclairage au néon.

Les composants électroniques photo-émetteurs émettent des lumières monochromes de couleurs différentes ; cela permet d'associer différentes couleurs à différentes zones du panneau. Cela permet par exemple l'éclairage de lettres insérées dans la plaque ou entre deux plaques avec des couleurs différentes.

Cette possibilité découle de l'émission très dirigée du faisceau lumineux par le composant électronique.

Enfin, par le mélange de composants émettant des couleurs différentes on peut créer des couleurs d'éclairage variées.

Bien que l'usage soit principalement celui des panneaux dits d'affichage ou d'informations, il est également possible de réaliser de cette manière des panneaux d'informations destinés par exemple à l'information municipale (mobilier urbain) ; il peut également s'agir de panneaux de signalisation routière.

La présente invention sera décrite ci-après de manière plus détaillée à l'aide d'un exemple de réalisation de l'invention représenté schématiquement dans les dessins annexés dans lesquels :
- la figure 1 est une vue en coupe transversale d'un panneau éclairé, indépendant, selon l'invention.
- la figure 2 est une vue de détail d'une variante de réalisation de panneau.
- la figure 3 est une vue de face d'un panneau équipé de plusieurs sources lumineuses électriques réparties.
- La figure 4 est une vue en coupe d'un autre mode de réalisation de l'invention.
- La figure 5 est une vue de face du panneau de la figure 4.
- La figure 6 montre un troisième mode de réalisation de l'invention.

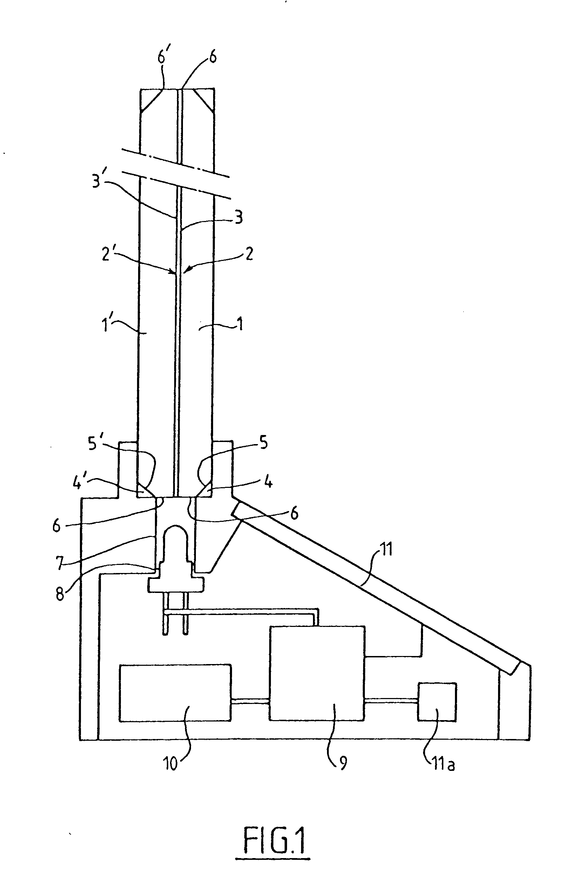

Selon la figure 1, le panneau d'affichage de l'invention, notamment un panneau d'affichage publicitaire, éclairé, se compose d'une plaque transparente 1 au dos 2 de laquelle est placée une surface à afficher 3 (par exemple une affiche commerciale ou une affiche d'informations). Il peut également s'agir d'une information de circulation routière dans le cas où le panneau d'affichage est un panneau indicateur routier.

Comme cela est indiqué à la figure 1, la plaque 1 peut être complétée par une plaque 1' permettant d'afficher sur sa face arrière 2' une surface d'informations 3' appliquée par exemple contre le dos de la surface 3 ou par l'intermédiaire d'une feuille réfléchissante sur ses deux faces. Cette feuille réfléchissante sur ses deux faces est par exemple une feuille métallisée ou présentant une surface perlée telle que celle d'un écran de cinéma pour bien renvoyer la lumière qu'elle reçoit.

A leur base et à leur partie supérieure les plaques 1, 1' ont des coins 4, 4' biseautés munis d'une surface réfléchissante 5, 5', par exemple un ruban adhésif métallisé. La tranche 6, 6' des plaques peut également être réfléchissante sauf à l'emplacement de la source lumineuse répartie. Cette source lumineuse répartie 7 se compose d'une rampe à composants électroniques photo-luminescents ou photo-émetteurs 8 placée contre la tranche 6, 6' du panneau. Ces composants électroniques sont des composants tels que des diodes LED ou des phototransistors. L'éclairage se diffuse alors à l'intérieur du panneau et se réfracte sur la surface à afficher.

Comme ces composants ont une photo-émission dirigée, pratiquement toute la lumière émise passe dans la plaque.

De plus, on peut utiliser des composants émettant la même couleur de lumière ou des couleurs différentes. Les émissions peuvent être intentionnellement séparées et le rester pour créer des zones éclairées de couleurs différentes en jouant sur la très grande directivité des faisceaux et leur chemin de transmission rectiligne dans la plaque. En multipliant les sources de plusieurs couleurs et en jouant sur la réflexion des faisceaux sur les bords de chaque plaque on peut créer des éclairages de couleurs mélangées.

Cette rampe 8 est alimentée à partir d'une alimentation électrique indépendante composée d'un circuit de régulation 9 reliant la rampe à une batterie 10 et à un panneau solaire (cellule photovoltaïque) 11. La faible consommation des rampes de composants électroniques 8 permet de réduire la surface du capteur solaire nécessaire pour charger la batterie 10 pendant le jour, dans les conditions les plus favorables.

Le circuit comporte également une prise 11a de tension continue ou un redresseur permettant de recharger la batterie à partir du réseau électrique ou d'un chargeur. Cette caractéristique convient notamment pour des panneaux mobiles par exemple pour des expositions.

L'ensemble ainsi réalisé constitue un ensemble autonome ne nécessitant aucun raccordement à un réseau. Le panneau d'affichage selon l'invention peut également servir de panneau indicateur, par exemple pour l'affichage d'informations urbaines ou encore pour les panneaux indicateurs de signalisation de circulation.

Bien que de manière usuelle les panneaux soient plats, il est également possible de réaliser des panneaux incurvés, par exemple des colonnes d'affichage telles que des colonnes Morice.

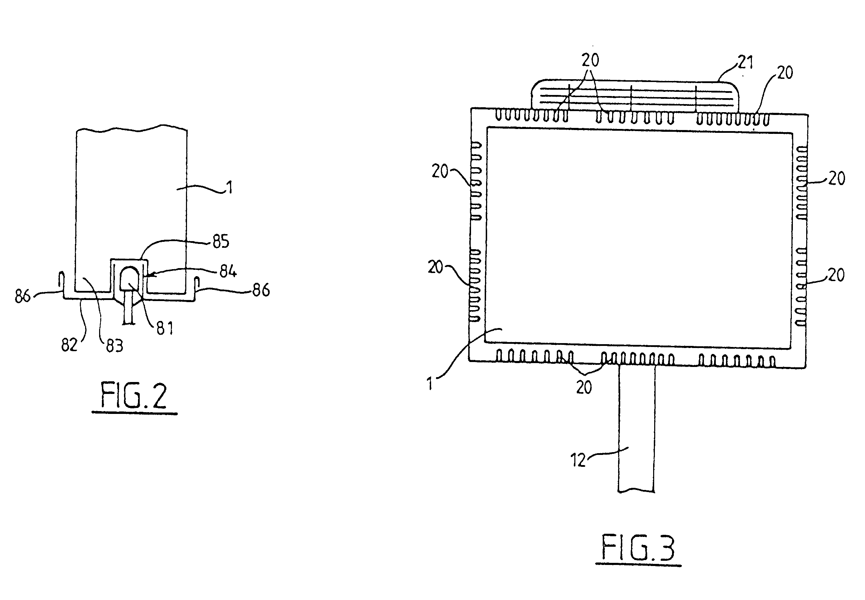

La figure 2 montre une variante de la source lumineuse répartie de la figure 1. Cette source est constituée également par un ensemble de photo-diodes 81 mais elle est montée dans un profilé 82 à surfaces latérales 83, 84 réfléchissantes de manière à ne laisser sortir la lumière que vers l'avant. La plaque 1 (ou 1, 1') comporte sur sa tranche une rainure 85 dans laquelle se loge la source lumineuse du moins les photo-diodes 81 et les deux surfaces réfléchissantes latérales 83, 84.

Enfin, le support 82 est muni de chaque côté d'un bourrelet d'enclipsage 86 pour fixer la rampe sur la tranche de la plaque.

La figure 3 montre une vue de face simplifiée d'un panneau 1 porté par un pied 12 et qui est muni à sa périphérie d'un certain nombre de rampes photoémissives 20. La partie supérieure du panneau est équipée de la cellule photo-voltaïque 21 alimentant la batterie non représentée.

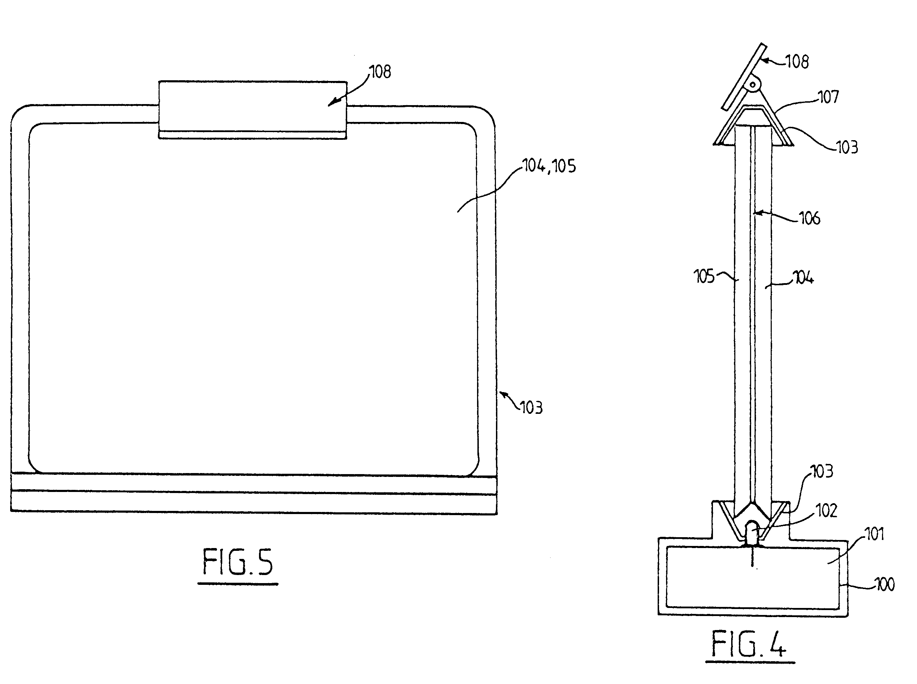

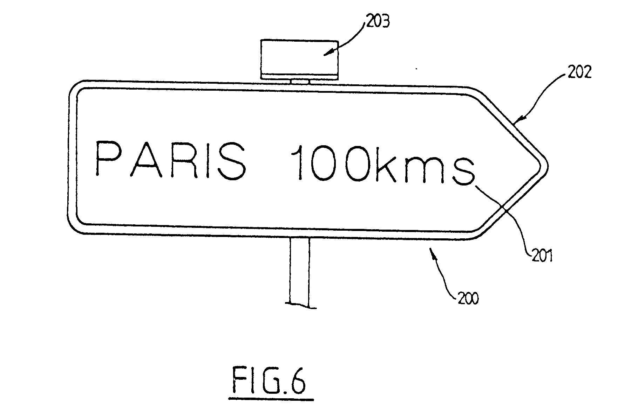

Dans le second mode de réalisation de l'invention représenté aux figures 4 et 5, le panneau indépendant se compose d'une embase 100 avec le compartiment technique 101 contenant l'accumulateur, le circuit de régulation. Sur la partie supérieure du compartiment technique se trouve la source lumineuse répartie 102 formée de photo-diodes. Cette rampe à photo-diodes est entourée par une pièce à section en V, 103 formant réflecteur et constituant l'entourage du panneau.

Le panneau se compose de deux plaques transparentes 104, 105 avec interposition d'une couche réfléchissante 106 sur ses deux faces. Cette couche 106 est par exemple une surface métallisée ou perlée sur ses deux faces pour renforcer la diffusion de la lumière à travers les surfaces éclairées (dans ce cas il s'agit d'un éclairage par transparence à travers les surfaces éclairées en complément de l'éclairage par l'avant assuré par la tranche de chaque plaque.

L'ensemble du panneau est surmonté d'un support 107 portant le panneau solaire 108.

La figure 6 montre un panneau de signalisation routière 200 dont la surface indicatrice 201 proprement dite est éclairée par une source lumineuse répartie 202 prévue sur une partie ou la totalité de la périphérie du panneau. Cette source est reliée à un panneau solaire 203 par l'intermédiaire d'un accumulateur et d'un système de régulation prévus à la base du panneau (non représenté).

## Revendications

1°) Panneau d'affichage et de signalisation, notamment panneau d'affichage publicitaire ou panneau routier, formé d'une plaque transparente (1) éclairée par la tranche, par une source lumineuse (7) reliée à une alimentation électrique indépendante composée d'une batterie (10) et d'un circuit de régulation (9) reliant la batterie (10) à la source lumineuse (7), comportant un panneau photovoltaïque (11) relié à la batterie (10) par l'intermédiaire du circuit de régulation (9) pour recharger la batterie (10) ainsi qu'un moyen de branchement d'une tension continue ou alternative, relié au circuit (11a) de régulation pour charger la batterie (10), panneau caractérisé en ce que :

- la source d'éclairage est une source lumineuse répartie (7) constituée par un ensemble de composants électroniques photo-émetteurs (8),
- les tranches (6, 6') du panneau (1, 1') sont munies d'une surface réfléchissante à l'exception des emplacements recevant la source lumineuse répartie (7).

2°) Panneau d'affichage selon la revendication 1, caractérisé en ce que la source lumineuse répartie (7) est prévue sur plusieurs côtés du panneau (1, 1').

3°) Panneau selon l'une quelconque des revendications 1 à 2, caractérisé en ce qu'il est constitué de deux panneaux transparents (1, 1') juxtaposés et recevant entre eux la ou les surfaces à afficher (3, 3').

**4°)** Panneau d'affichage selon la revendication 1, caractérisé en ce qu'il comprend une surface réfléchissante (106) appliquant la surface à afficher contre le dos du ou des panneaux transparents.

**5°)** Panneau selon la revendication 4, caractérisé en ce que la surface réfléchissante (106) est une surface métallisée ou perlée sur une face ou sur les deux faces.

**6°)** Panneau selon la revendication 1, caractérisé en ce que le composant électronique photoémetteur est une diode ou un phototransistor.

**7°)** Panneau selon la revendication 1, caractérisé en ce que les composants électroniques photoémetteurs émettent des lumières de couleurs différentes associées à des zones d'éclairage du panneau.

FIG.1

FIG.3

FIG.2

FIG.4

FIG.5

FIG.6

**Office européen des brevets**

# RAPPORT DE RECHERCHE EUROPEENNE

Numero de la demande

EP 92 40 1393

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | DE-C-3 730 591 (INSTEC) <br> * colonne 3, ligne 3 - colonne 4, ligne 59; figures 1-3 * <br> --- | 1-7 | G09F13/18 |
| Y | DE-U-8 912 008 (A. HENNING) <br> * page 2, ligne 12 - page 4, ligne 28; revendication 1; figure 2 * <br> --- | 1-7 | |
| Y | GB-A-2 227 871 (H. WEN) <br> * page 6, ligne 1 - page 7, ligne 22; figures 1-3 * <br> ----- | 1-7 | |

| | DOMAINES TECHNIQUES RECHERCHES (Int. Cl.5 ) |
|---|---|
| | G09F |

Le présent rapport a été établi pour toutes les revendications

| Lieu de la recherche | Date d'achèvement de la recherche | Examinateur |
|---|---|---|
| LA HAYE | 24 JUILLET 1992 | GALLO G. G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................

& : membre de la même famille, document correspondant

EPO FORM 1503 03.82 (P0402)